# NEUE EUROPÄISCHE PATENTSCHRIFT

(11) **EP 0 650 058 B2**
(45) Veröffentlichungstag und Bekanntmachung des Hinweises auf die Entscheidung über den Einspruch: **28.12.2005**
(45) Hinweis auf die Patenterteilung: 29.04.1998
(21) Anmeldenummer: 94116121.8
(22) Anmeldetag: 13.10.1994
(51) Int. Cl.: G01P 1/04

(54) **Flanschmotor mit Messeinrichtung zur Erfassung der Umdrehung der Motorwelle**
Face type motor with measuring device for detecting the rotation of the motor shaft
Moteur à flasque-bride avec dispositif de mesure pour la détection de la rotation d'arbre du moteur

(30) Priorität: 20.10.1993 DE 9315994 U
(43) Veröffentlichungstag der Anmeldung: 26.04.1995
(73) Patentinhaber: Ströter Antriebstechnik GmbH, D-40549 Düsseldorf (DE)
(72) Erfinder: Linke, Alfred, D-41462 Neuss (DE)
(74) Vertreter: Paul, Dieter-Alfred

(56) Entgegenhaltungen:
- DE-A- 2 343 480
- DE-A- 3 122 655
- DE-A- 3 726 393
- DE-A- 4 120 023
- JP-A- 378 457
- US-A- 3 720 914
- US-A- 4 639 595

## Beschreibung

Die Erfindung betrifft einen Flanschmotor nach dem Oberbegriff des Anspruchs 1.

Bei Flanschmotoren handelt es sich um solche Motoren, die am Ausgang der Motorwelle einen Flansch aufweisen, über den sie an anzutreibende Geräte oder Vorrichtungen, beispielsweise Pumpen, Fördereinrichtungen o. dgl., oder an Getriebe mit entsprechenden Gegenflanschen angebracht werden können (z.B. US-A-3720914). Als Motoren kommen nicht nur Elektromotoren, sondern auch Hydraulik- oder Pneumatikmotoren in Frage.

Flanschmotoren werden u. a. eingesetzt, um Positionierungen verschiedenster Art vorzunehmen, beispielsweise bei Fördereinrichtungen bezüglich der darauf zu transportierenden Güter. Außerdem ist es häufig erwünscht, die aktuelle Drehzahl des Flanschmotors festzustellen, um hierüber eine indirekte Aussage beispielsweise über die Fördermenge einer Pumpe zu erhalten. Hierzu werden die Flanschmotoren mit einer Meßeinrichtung versehen, mit der die Umdrehung der Motorwelle erfaßt wird. Solche Meßeinrichtungen haben ein mit der Motorwelle in Verbindung stehendes Geberelement und ein statisch gehaltenes Empfängerelement. Das Geberelement erzeugt eine zur Drehzahl der Motorwelle proportionale Anzahl von Signalen pro Zeiteinheit, welche von dem z. B. als Sensor ausgebildeten Empfängerelement abgetastet und in der Meßeinrichtung in ein Meßsignal umgewandelt werden, das dann einer Steuerungseinrichtung oder einer Anzeige zugeführt wird. Geber- und Empfängerelemente können dabei insbesondere nach optischen, magnetischen, induktiven oder kapazitiven Prinzipien arbeiten, wie dies im Stand der Technik an sich bekannt ist.

Im Stand der Technik wird die Meßeinrichtung an der freien Seite des Flanschmotors angebracht. Dies ist von Nachteil, da der dortige Gehäusedeckel des Flanschmotors durchbrochen werden muß (vgl. DE-C-4120023). Zudem ist es erforderlich, die Motorwelle zu verlängern. Außerdem benötigt eine solche Meßeinrichtung ein eigenes Gehäuse. Eine entsprechende Anordnung ist der DE-A-37 26 393 zu entnehmen. Auch in der DE-A-31 22 655 ist ein Elektromotor offenbart, bei dem die Meßeinrichtung an der Abtriebseite des Motors abgewandten Seite zwischen Motor und einem Lüfter zu Kühlung des Motors innerhalb des Motorgehäuses angeordnet ist.

Die nicht vorveröffentlichte EP-A-0 593 913 A2 bezieht sich auf eine elektromotorisch angetriebene Hydraulikpumpe, bei der eine Meßeinrichtung auf der Abtriebseite zwischen Elektromotor und einer Trennwand angeordnet ist, die den Elektromotor von der Hydraulikpumpe trennt. Eine entsprechende Anordnung der Meßeinrichtung ist der JP-A-3-78457 zu entnehmen. In beiden Fällen handelt es sich nicht um Flanschmotoren.

In dem Firmenprospekt Baumer electric: Inkremental-Drehgeber, Absolut-Drehgeber, 3/89 sind Elektromotoren gezeigt, deren Stirnseiten nicht als Flansche ausgebildet sind, sondern als Abschlußscheiben. Bei einer Ausführungsform ist ein Drehgeber zwischen Antrieb und Last angeordnet, wobei der Drehgeber mit Abstand sowohl zum Motor als auch zur Last montiert und die Abstützung des Drehgebers über eine nicht mit dem Motor verbundene Verstrebung geschieht.

In der US-A-4,639,595 ist ein Flanschmotor mit einer Meßeinrichtung zur Erfassung der Umdrehung der Motorwelle offenbart, deren Empfängerelement über ein Halteorgan an der dem Flansch des Flanschmotors abgewandten Seite einer den Gegenflansch bildenden Halterung angeordnet ist.

Der Erfindung liegt deshalb die Aufgabe zugrunde, eine Kombination aus Flanschmotor und Meßeinrichtung für die Erfassung der Umdrehung der Motorwelle so zu gestalten, daß am Flanschmotor selbst möglichst geringe Änderungen notwendig sind.

Diese Aufgabe wird erfindungsgemäß dadurch gelöst, daß das die Meßeinrichtung im Bereich des Flansches angeordnet ist und das Halteorgan am Flanschangeordnet und zwischen Flansch und Gegenflansch verspannbar ist, wobei das Halteorgan vorzugsweise als Zwischenflansch ausgebildet ist.

Bei der besonderen Anordnung der Meßeinrichtung nach der Erfindung wird ein meist ohnehin vorhandener Raum genutzt, ohne daß an dem Flanschmotor selbst Änderungen erforderlich sind. Dies gilt insbesondere für den besonders bevorzugten Fall, daß das Halteorgan als Zwischenflansch ausgebildet ist. Das Halteorgan kann dann auf einfache Weise bei der Montage des Flanschmotors zwischen Flansch und Gegenflansch verspannt werden. Ein besonderes Gehäuse für die Meßeinrichtung ist dann nicht erforderlich.

Bei einem weiteren Merkmal der Erfindung ist vorgesehen, daß das Halteorgan beidseitig erste Zentriermittel aufweist, die mit komplementären zweiten Zentriermitteln an Flansch und Gegenflansch zusammenwirken. Das Halteorgan kann dabei auch die Funktion eines Reduzierflansches übernehmen, wenn der Flansch des Flanschmotors nicht zu dem Gegenflansch paßt, an dem der Flanschmotor befestigt werden soll. Dabei können die Zentriermittel als Zentrierabsätze ausgebildet sein. Vorzugsweise sollten die Verbindungsmittel, beispielsweise Schrauben o. dgl., zur Verspannung von Flansch und Gegenflansch das Halteorgan durchsetzen, um auch insoweit eine Festlegung zu erreichen.

Das Geberelement kann als auf der Motorwelle sitzender Rotor ausgebildet sein, der je nach dem verwendeten Prinzip ausgebildet ist. Insoweit kann auf an sich bekannte Elemente, die für die Erfassung der Umdrehung einer Welle geeignet sind, zurückgegriffen werden.

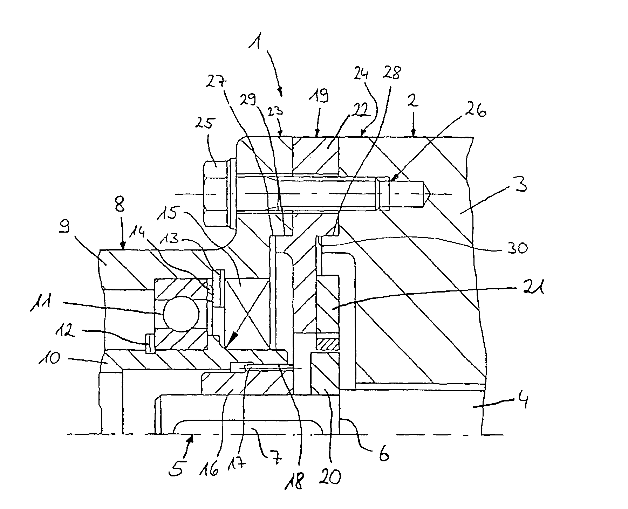

In der Zeichnung ist die Erfindung anhand eines Ausführungsbeispiels näher veranschaulicht. Die Figur zeigt eine Teilansicht eines erfindungsgemäßen Getriebemotors (1) im Längsschnitt, und zwar nur die obere Hälfte, die mit der unteren Hälfte symmetrisch übereinstimmt.

Der Getriebemotor (1) hat einen Elektromotor (2), der in dieser Ansicht abgebrochen dargestellt ist, so daß von ihm nur ein Teilstück eines Motorgehäuses (3) und ein Teilstück einer Motorwelle (4) zu sehen ist. Die Motorwelle (4) weist an ihrer Ausgangsseite ein Wellenende (5) mit einem Wellenabsatz (6) und einer Paßfeder (7) auf.

Die von dem Elektromotor (2) erzeugte Leistung wird an ein Getriebe (8) übertragen, von dem in dieser Ansicht nur ein Teilstück gezeigt ist. Das Getriebe (8) weist ein Getriebegehäuse (9) auf, in dem eingangsseitig eine Hohlwelle (10) und ausgangsseitig eine in dieser Ansicht nicht dargestellte Ausgangswelle vorgesehen sind. Die Hohlwelle (10) ist über ein Kugellager (11) im Getriebegehäuse (9) gelagert. Zur Fixierung des Kugellagers (11) dienen dabei ein in eine Nut in der Hohlwelle (10) eingesetzter Sicherungsring (12) und ein in eine Nut im Getriebegehäuse (9) eingesetzter Sicherungsring (13). Zum Ausgleich von Ferligungstoleranzen ist zwischen dem Sicherungsring (13) und dem Kugellager (11) eine Ausgleichsscheibe (14) eingelegt. Ein in das Getriebegehäuse (9) eingesetzter Wellendichtring (15) dichtet die Austrittsöffnung der Hohlwelle (10) gegen Schmierminelaustritt ab.

Die Hohlwelle (10) und die Motorwelle (4) sind über einen Zahnring (16) miteinander verbunden. Der Zahnring (16) ist an seinem inneren Durchmesser mit einer in dieser Ansicht nicht dargestellten Nut für die Paßfeder (7) versehen, während er auf seiner Außenseite eine Außenverzahnung (17) aufweist, die in eine entsprechende Innenverzahnung (18) auf der Innenseite der Hohlwelle (10) eingreift.

Zwischen Elektromotor (2) und Getriebe (8) ist eine Meßeinrichtung (19) zur Erfassung des Drehwinkels der Motorwelle (4) eingesetzt. Die Meßeinrichtung (19) weist einen Rotor (20) aus ferromagnetischem Material auf, der verdrehfest so weit auf das Wellenende (5) der Motorwelle (4) aufgeschoben ist, daß er am Wellenabsatz (6) ansteht.

Radial versetzt zum Rotor (20) ist ein Impulssensor (21) an einem Haltering (22) angebracht, der sich zwischen einem Flansch (23) des Getriebegehäuses (9) und einem Flansch (24) des Motorgehäuses (3) erstreckt. Dabei sind Getriebegehäuse (9), Haltering (22) und Motorgehäuse (3) durch eine Schraube (25), die in ein Gewindeloch (26) eingeschraubt ist, miteinander verspannt. Entsprechende Schrauben sind über den Umfang des Getriebe- bzw. Motorgehäuses (3, 9) verteilt.

Das Getriebegehäuse (9) weist einen Zentrieransatz (27) auf, der so ausgeformt ist, daß er gegengleich zu einem Zentrieransatz (28) im Motorgehäuse (3) ist. Im Haltering (22) sind Zentrieransätze (29, 30) ausgeformt, die über die Zentrieransätze (27, 28) eine zueinander zentrierte Lage der Hohlwelle (10) und der Motorwelle (4) herstellen, wenn das Getriebegehäuse (9), das Motorgehäuse (3) und der Haltering (22) miteinander verspannt sind.

Bei der Drehung der Motorwelle (4) erzeugt das sich mit dem Rotor (20) drehende Magnetfeld eine Änderung des magnetischen Flusses. Der Impulssensor (21) wandelt diese Änderung des magnetischen Flusses in ein elektrisches Signal um, das einem in dieser Ansicht nicht dargestellten Meßwertwandler zugeführt wird. Dieser Meßwertwandler errechnet aus dem ihm zugeführten Signal den Drehwinkel der Motorwelle (4).

## Patentansprüche

1. Flanschmotor mit einer Motorwelle (4), deren Ausgang mit von dem Flanschmotor (1) anzutreibenden Geräten und Vorrichtungen, beispielsweise Pumpen, Getriebe (8), Fördereinrichtungen oder dergleichen, verbindbar ist, und einem Motorgehäuse (3), das einen Flansch (24) am Ausgang der Motorwelle (4) aufweist der für den Anschluß an einen Gegenflansch (23) z.B. eines Getriebes (8), einer Pumpe oder einer Halterung ausgebildet ist, sowie mit einer Meßeinrichtung (19) zur Erfassung der Umdrehung der Motorwelle (4), wobei die Meßeinrichtung (19) ein Halteorgan (22) sowie wenigstens ein Geberelement (20) und wenigstens ein Empfängerelement (21) aufweist, das am Halteorgan (22) angebracht ist, **dadurch gekennzeichnet, daß** die Meßeinrichtung (19) im Bereich des Flansches (24) angeordnet ist und das Halteorgan (22) am Flansch (24) angeordnet und zwischen Flansch (24) und Gegenflansch (23) verspannbar ist.

2. Flanschmotor nach Anspruch 1, **dadurch gekennzeichnet, daß** das Halteorgan (22) als Zwischenflansch ausgebildet ist.

3. Flanschmotor nach Anspruch 2, **dadurch gekennzeichnet, daß** das Halteorgan (22) beidseitig erste Zentriermittel (29, 30) aufweist, die mit komplementären zweiten Zentriermitteln (27, 28) an Flansch (24) und Gegenflansch (23) zusammenwirken.

4. Flanschmotor nach Anspruch 3, **dadurch gekennzeichnet, daß** die Zentriermittel (27, 28, 29, 30) als Zentrierabsätze ausgebildet sind.

5. Flanschmotor nach einem der Ansprüche 1 bis 4, **dadurch gekennzeichnet, daß** die Verbindungsmittel (25) zur Verspannung von Flansch (24) und Gegenflansch (23) das Halteorgan (22) durchsetzen.

6. Flanschmotor nach einem der Ansprüche 1 bis 5, **dadurch gekennzeichnet, daß** das Geberelement (20) als auf der Motorwelle (4) sitzender Rotor ausgebildet ist.

## Claims

1. Flange mounted motor (1) with a motor shaft (4), the outer end of which is connectable with devices and apparatusses, for example pumps, gearings (8), transmissions or similar, to be driven by the flange mounted motor (1), and with a motor housing (3), which comprises a flange (24) at the outer end of the motor shaft (4), which is designed for the joining at a facing flange (23) for example of a gearing (8), a pump or a holding means, as well as with a measurement device (19) for capturing the rotation of the motor shaft (4), the measuring device (19) having a holding means (22) and at least one sender element (20) and at least one receiver element (21), which is arranged at the holding means (22), **characterized in that** the measurement device (19) is disposed in the region of the flange (24) and the holding means (22) is disposed at flange (24) and can be clamped between flange (24) and facing flange (23).

2. Flange mounted motor according to claim 1, **characterized in that** the holding means (22) is constructed as a interim flange.

3. Flange mounted motor according to claim 2, **characterized in that** the holding means (19) has, to both sides, first centration means (29, 30) which cooperate with complementary second centration means (27, 28) on flange (24) and facing flange (23).

4. Flange mounted motor according to clam 3, **characterized in that** the centration means (27, 28, 29, 30) are constructed as centration shoulders.

5. Flange mounted motor according to one of claims 1 to 4, **characterized in that** the connecting means (25) for clamping the flange (24) and the facing flange (23) pass through the holding means (19).

6. Flange mounted motor according to one of claims 1 to 5, **characterized in that** the sender element (20) is constructed as a rotor fitted on the motor shaft (4).

## Revendications

1. Moteur à flasque comportant un arbre moteur (4) dont la sortie peut être reliée à des appareils et dispositifs, par exemple des pompes, des engrenages (8), des convoyeurs ou analogues, destinés à être entraînés par le moteur à flasque (1), et un carter de moteur (3) présentant, à la sortie de l'arbre moteur une bride (24) conformée pour être reliée à une contre-bride (23), par exemple d'un engrenage (8), d'une pompe ou d'un dispositif de fixation, ainsi qu'un dispositif de mesure (19) pour détecter la rotation de l'arbre moteur (4), le dispositif de mesure présentant un élément de fixation (22) ainsi qu'au moins un élément émetteur (20) et au moins un élément récepteur (21) qui est fixé à l'élément de fixation (22), **caractérisé en ce que** le dispositif de mesure (19) est placé dans la zone de la bride (24), et l'élément de fixation (22) est disposé sur la bride (24) et peut être immobilisé entre la bride (24) et la contre-bride (23).

2. Moteur à flasque-bride selon la revendication 1, **caractérisé en ce que** l'élément de fixation (22) est réalisé en tant que bride intermédiaire.

3. Moteur à flasque-bride selon la revendication 2, **caractérisé en ce que** l'élément de fixation (22) présente de chaque côté des premiers moyens de centrage (29, 30) qui coopèrent avec des seconds moyens de centrage complémentaires (27, 28) sur la bride (24) et la contre-bride (23).

4. Moteur à flasque-bride selon la revendication 3, **caractérisé en ce que** les moyens de centrage (27, 28, 29, 30) sont réalisés en tant que rebords de centrage.

5. Moteur à flasque-bride selon l'une des revendications 1 à 4, **caractérisé en ce que** les moyens d'assemblage (25) pour immobiliser la bride (24) et la contre-bride (23) traversent l'élément de fixation (22).

6. Moteur à flasque-bride selon l'une des revendications 1 à 5, **caractérisé en ce que** l'élément émetteur (20) est réalisé en tant que rotor monté sur l'arbre (4) du moteur.
